# EUROPEAN PATENT APPLICATION

(11) **EP 4 782 291 A1**
(43) Date of publication of application: **29.07.2026**
(21) Application number: 25226181.3
(22) Date of filing: 22.12.2025
(51) Int. Cl.: B60W 30/08

(54) **VEHICLE CONTROL APPARATUS**

(30) Priority: 23.01.2025 JP 2025009550
(71) Applicant: TOYOTA JIDOSHA KABUSHIKI KAISHA, Toyota-Shi, Aichi-Ken 471-8571 (JP)
(72) Inventor: MIYAMOTO, Yuhei, 471-8571 TOYOTA-SHI, AICHI-KEN (JP)
(74) Representative: Cabinet Beau de Loménie

(57) **Abstract**

A vehicle control apparatus (10) controls a collision risk reduction system which executes a collision risk reduction control and a skid prevention system which executes a skid prevention control. The apparatus executes the collision risk reduction control when a collision condition that a collision risk between a host vehicle (100) and an object (300) is at or above a predetermined level is satisfied and execution of the collision risk reduction control is permitted. The apparatus acquires a travel trajectory curvature degree, permits execution of the collision risk reduction control when the skid prevention system is deactivated by a driver and the travel trajectory curvature degree is equal to or less than a predetermined threshold, and avoid permitting execution of the collision risk reduction control when the skid prevention system is deactivated by the driver and the travel trajectory curvature degree is greater than the predetermined threshold.

## Description

### BACKGROUND

### Field

The present invention relates to a vehicle control apparatus.

### Description of the related art

There is known a vehicle control apparatus including a skid prevention system and a collision risk reduction system. The skid prevention system executes a skid prevention control to prevent skidding of a vehicle. The collision risk reduction system executes a collision risk reduction control to prevent a collision between the vehicle and an object.

Also, as such a vehicle control apparatus, there is known a vehicle control apparatus which activates the skid prevention system when determining that skidding of the vehicle may occur upon execution of the collision risk reduction control in a situation where the skid prevention system is deactivated (for example, see Japanese Unexamined Patent Publication No. 2024-81439).

The above-described conventional vehicle control apparatus activates the skid prevention system when determining that skidding of the vehicle may occur, regardless of the reason for deactivation of the skid prevention system. Accordingly, even in a case where the skid prevention system is deactivated based on the intention of a driver of the vehicle, the conventional vehicle control apparatus uniformly activates the skid prevention system when determining that skidding of the vehicle may occur. However, it results in ignoring the driver's own intention, and is not preferable.

### SUMMARY

An object of the present invention is to provide a vehicle control apparatus capable of expanding the application range of the collision risk reduction by the collision risk reduction control while taking the driver's intention into consideration.

A vehicle control apparatus according to the present invention comprises an electronic control unit which controls a collision risk reduction system which executes a collision risk reduction control to reduce a collision risk between a host vehicle and an object existing within a predetermined range in a traveling direction of the host vehicle, and a skid prevention system which executes a skid prevention control to prevent skidding of the host vehicle. The electronic control unit is configured to execute the collision risk reduction control when a collision condition that the collision risk between the host vehicle and the object is at or above a predetermined level is satisfied and execution of the collision risk reduction control is permitted. The electronic control unit is configured to acquire a curvature degree of a travel trajectory of the host vehicle as a travel trajectory curvature degree, permit execution of the collision risk reduction control when the skid prevention system is deactivated by a driver of the host vehicle and the travel trajectory curvature degree is equal to or less than a predetermined threshold, and avoid permitting execution of the collision risk reduction control when the skid prevention system is deactivated by the driver and the travel trajectory curvature degree is greater than the predetermined threshold.

According to the present invention, even in a situation where the skid prevention system is deactivated by the driver, when the travel trajectory curvature degree is relatively small, execution of the collision risk reduction control is permitted. Therefore, it is possible to expand the application range of the collision risk reduction by the collision risk reduction control while taking the driver's intention into consideration.

In the vehicle control apparatus according to an aspect of the present invention, the electronic control unit may be configured to avoid executing the collision risk reduction control when the collision condition is satisfied and execution of the collision risk reduction control is not permitted.

According to this aspect of the present invention, when the travel trajectory curvature degree is relatively large and there is a possibility that skidding of the host vehicle occurs if the collision risk reduction control is executed, it is possible to prevent execution of the collision risk reduction control.

Further, in the vehicle control apparatus according to another aspect of the present invention, the electronic control unit may be configured to acquire the travel trajectory curvature degree based on at least one of a steering angle of the host vehicle and a yaw rate of the host vehicle.

According to this aspect of the present invention, it is possible to acquire the travel trajectory curvature degree based on the steering angle or the yaw rate.

Furthermore, in the vehicle control apparatus according to further another aspect of the present invention, the electronic control unit may be configured to acquire a travel road curvature degree as the travel trajectory curvature degree. In this case, the travel road curvature degree may be a curvature degree of a road on which the host vehicle is traveling.

According to this aspect of the present invention, it is possible to use the curvature degree of the road on which the host vehicle is traveling as the travel trajectory curvature degree.

Furthermore, in the vehicle control apparatus according to further another aspect of the present invention, the electronic control unit may be configured to acquire, as the travel road curvature degree, one of (i) a curvature degree of a road lane marking appearing in an image acquired by an image sensor and (ii) a curvature degree of a road on which the host vehicle is traveling acquired from map information. In this case, the image sensor may be mounted on the host vehicle to acquire an image in a traveling direction of the host vehicle.

According to this aspect of the present invention, it is possible to acquire the travel road curvature degree using the image sensor or the map information.

Furthermore, in the vehicle control apparatus according to further another aspect of the present invention, the electronic control unit may be configured to activate the skid prevention system, permit execution of the collision risk reduction control, and execute the collision risk reduction control when the collision condition is satisfied, the curvature degree is greater than the predetermined threshold, and the skid prevention system is deactivated by the driver.

According to this aspect of the present invention, when the travel trajectory curvature degree is relatively large and there is a possibility that skidding of the host vehicle occurs if the collision risk reduction control is executed, the skid prevention system is activated. Therefore, it is possible to prevent skidding of the host vehicle when the collision risk reduction control is executed.

The constituent elements of the present invention are not limited to the embodiments of the present invention described later with reference to the drawings. Other objects, other features, and accompanying advantages of the present invention will be easily understood from the description of the embodiments of the present invention.

### BRIEF DESCRIPTION OF THE DRAWINGS

FIG. 1 is a diagram showing a vehicle control apparatus according to an embodiment of the present invention.
FIG. 2 is a diagram showing a situation in which a host vehicle is traveling on a curved road.
FIG. 3 is a diagram showing a situation in which an object exists in front of the host vehicle when the host vehicle is traveling on a curved road.
FIG. 4 is a flowchart showing a routine executed by the vehicle control apparatus according to the embodiment of the present invention.
FIG. 5 is a diagram showing a first curve radius.
FIG. 6 is a diagram showing a second curve radius.
FIG. 7 is a flowchart showing a routine executed by the vehicle control apparatus according to the embodiment of the present invention.

### DETAILED DESCRIPTION

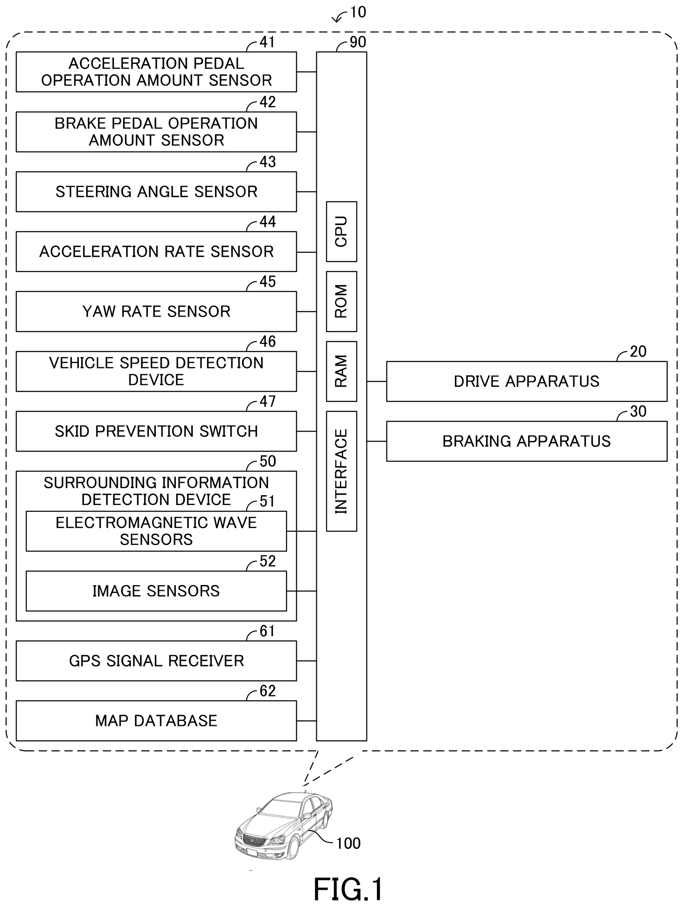

Hereinafter, a vehicle control apparatus according to an embodiment of the present invention will be described with reference to the drawings. FIG. 1 shows the vehicle control apparatus 10 according to the embodiment of the present invention. The vehicle control apparatus 10 is mounted on a host vehicle 100. Hereinafter, the vehicle control apparatus 10 will be described by taking as an example a case in which an operator of the host vehicle 100 is a driver of the host vehicle 100 (that is, a person who gets in the host vehicle 100 and drives the host vehicle 100).

However, the operator of the host vehicle 100 may be a remote operator of the host vehicle 100 (that is, a person who does not get in the host vehicle 100 but remotely drives the host vehicle 100). In a case where the operator of the host vehicle 100 is a remote operator, the vehicle control apparatus 10 is mounted on the host vehicle 100 and on remote operation equipment installed outside the host vehicle 100 for remotely driving the host vehicle 100, and the functions of the vehicle control apparatus 10 described below are performed by being shared between the vehicle control apparatus 10 mounted on the host vehicle 100 and the vehicle control apparatus 10 mounted on the remote operation equipment.

It should be noted that, in the following description, the driver of the host vehicle 100 may be simply referred to as "the driver."

As shown in FIG. 1, the vehicle control apparatus 10 includes an ECU (electronic control unit) 90 as a control device. The ECU 90 includes a microcomputer as a main component. The microcomputer includes a CPU, a computer-readable storage medium, an interface, etc. The storage medium includes ROM, RAM, nonvolatile memory, etc. The CPU is configured to realize various functions by executing instructions, programs, or routines stored in the storage medium. In particular, in this example, the vehicle control apparatus 10 stores, in the storage medium, programs for realizing various controls executed by the vehicle control apparatus 10.

It should be noted that, in this example, the vehicle control apparatus 10 includes only one ECU 90, but the vehicle control apparatus 10 may be configured to include a plurality of ECUs, and the functions of the vehicle control apparatus 10 described below may be shared and performed by the respective ECUs.

Also, the vehicle control apparatus 10 may be configured to be able to update (upgrade) the programs stored in the storage medium via wireless communication (for example, internet communication) with external devices.

It should be noted that the vehicle control apparatus 10 is applied not only to vehicles that travel by manual driving by an operator but also to vehicles that travel by automatic driving.

As shown in FIG. 1, a drive apparatus 20 and a braking apparatus 30 are mounted on the host vehicle 100.

The drive apparatus 20 generates a driving force to be applied to the host vehicle 100 (in particular, to drive wheels of the host vehicle 100). The drive apparatus 20 includes, for example, an internal combustion engine and at least one electric motor. The drive apparatus 20 is electrically connected to the ECU 90. The vehicle control apparatus 10 controls the driving force applied to the host vehicle 100 by controlling the operation of the drive apparatus 20.

Further, the braking apparatus 30 applies a braking force to the host vehicle 100 (in particular, to wheels of the host vehicle 100). The braking apparatus 30 includes, for example, a hydraulic brake apparatus. The braking apparatus 30 is electrically connected to the ECU 90. The vehicle control apparatus 10 controls the braking force applied to the host vehicle 100 by controlling the operation of the braking apparatus 30.

Furthermore, the host vehicle 100 is equipped with an accelerator pedal operation amount sensor 41, a brake pedal operation amount sensor 42, a steering angle sensor 43, an acceleration rate sensor 44, a yaw rate sensor 45, a vehicle speed detection device 46, a skid prevention switch 47, a surrounding information detection device 50, a GPS signal receiver 61, and a map database 62.

The accelerator pedal operation amount sensor 41 is electrically connected to the ECU 90. The vehicle control apparatus 10 acquires an accelerator pedal operation amount AP by means of the accelerator pedal operation amount sensor 41. The accelerator pedal operation amount AP is an operation amount with respect to an accelerator pedal of the host vehicle 100.

The brake pedal operation amount sensor 42 is electrically connected to the ECU 90. The vehicle control apparatus 10 acquires a brake pedal operation amount BP by means of the brake pedal operation amount sensor 42. The brake pedal operation amount BP is an operation amount with respect to a brake pedal of the host vehicle 100.

The steering angle sensor 43 is electrically connected to the ECU 90. The vehicle control apparatus 10 acquires a steering angle θ by means of the steering angle sensor 43. The steering angle θ is a rotational angle of a steering shaft of the host vehicle 100 from a neutral position of the steering shaft. In other words, the steering angle θ is a rotational angle of a steering wheel of the host vehicle 100 from a neutral position of the steering wheel.

The acceleration rate sensor 44 is electrically connected to the ECU 90. The vehicle control apparatus 10 acquires a longitudinal acceleration rate Gx and a lateral acceleration rate Gy by means of the acceleration rate sensor 44. The longitudinal acceleration rate Gx is an acceleration rate in a longitudinal direction of the host vehicle 100. The lateral acceleration rate Gy is an acceleration rate in a lateral direction of the host vehicle 100.

The yaw rate sensor 45 is electrically connected to the ECU 90. The vehicle control apparatus 10 acquires a yaw rate YR of the host vehicle 100 by means of the yaw rate sensor 45.

The vehicle speed detection device 46 is electrically connected to the ECU 90. In this example, the vehicle speed detection device 46 includes wheel rotation speed sensors provided on respective wheels of the host vehicle 100. The vehicle control apparatus 10 acquires rotation speeds of the respective wheels of the host vehicle 100 by means of the vehicle speed detection device 46. Further, the vehicle control apparatus 10 acquires a travel speed of the host vehicle 100 as a host vehicle speed Vego based on the acquired rotation speeds of the respective wheels.

The skid prevention switch 47 is electrically connected to the ECU 90. The skid prevention switch 47 is operated by the driver. **In** a situation where a skid prevention system described later is in a deactivated state, when the skid prevention switch 47 is operated, the vehicle control apparatus 10 activates the skid prevention system. On the other hand, in a situation where the skid prevention system described later is in an activated state, when the skid prevention switch 47 is operated, the vehicle control apparatus 10 deactivates the skid prevention system.

The surrounding information detection device 50 detects information on surroundings of the host vehicle 100. **In** this example, the surrounding information detection device 50 includes a plurality of electromagnetic wave sensors 51 and a plurality of image sensors 52. The electromagnetic wave sensors 51 and the image sensors 52 are electrically connected to the ECU 90. The electromagnetic wave sensors 51 are, for example, radar sensors such as a millimeter-wave radars. The vehicle control apparatus 10 acquires information (object information IO) on objects existing around the host vehicle 100 by means of the electromagnetic wave sensors 51 as surrounding information IS. Further, the image sensors 52 are, for example, camera sensors. The vehicle control apparatus 10 acquires image information IC on the surroundings of the host vehicle 100 by means of the image sensors 52 as surrounding information IS.

The GPS signal receiver 61 is electrically connected to the ECU 90. The vehicle control apparatus 10 receives GPS signals via the GPS signal receiver 61. The vehicle control apparatus 10 acquires a current position Pnow of the host vehicle 100 based on the GPS signals.

The map database 62 stores map information IM. The map database 62 is electrically connected to the ECU 90. The vehicle control apparatus 10 acquires road information IR based on the current position Pnow of the host vehicle 100 and the map information IM. The road information IR is information on the road on which the host vehicle 100 is traveling.

### <Operation of Vehicle Control Apparatus>

Next, the operation of the vehicle control apparatus 10 will be described.

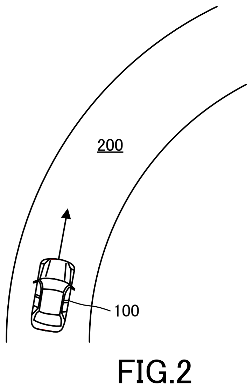

As shown in FIG. 2, when the host vehicle 100 is traveling on a curved road, skidding of the host vehicle 100 may occur. That is, when a host vehicle travel road 200 is a curved road, skidding of the host vehicle 100 may occur. The host vehicle travel road 200 is a road on which the host vehicle 100 is traveling, and in particular, a road within a predetermined distance range ahead of the current position of the host vehicle 100.

Therefore, the vehicle control apparatus 10 includes a skid prevention system. The skid prevention system executes a skid prevention control when a skid condition C1 is satisfied while the skid prevention system is activated. In other words, the skid prevention system executes a skid prevention control when the skid condition C1 is satisfied while the skid prevention system has been started.

The skid prevention control prevents skidding of the host vehicle 100. More specifically, the skid prevention control adjusts the braking force applied to each wheel of the host vehicle 100 and/or the driving force applied to the host vehicle 100 such that the skidding of the host vehicle 100 is resolved.

The skid condition C1 is satisfied when the host vehicle 100 starts skidding. The vehicle control apparatus 10 determines whether or not the skid condition C1 is satisfied based on a driving operation state and/or a vehicle travel state. In this example, the driving operation state includes the accelerator pedal operation amount AP, the brake pedal operation amount BP, and the steering angle θ. Further, in this example, the vehicle travel state includes the longitudinal acceleration rate Gx, the lateral acceleration rate Gy, the yaw rate YR, and the rotation speed of each wheel of the host vehicle 100.

It should be noted that, in a situation where the skid prevention system is deactivated, the skid prevention system does not execute the skid prevention control even when the skid condition C1 is satisfied. In other words, in a situation where the skid prevention system has not been started, the skid prevention system does not execute the skid prevention control even when the skid condition C1 is satisfied.

Further, the vehicle control apparatus 10 includes a collision risk reduction system. The collision risk reduction system executes a collision risk reduction control when a control execution condition C2 described later is satisfied.

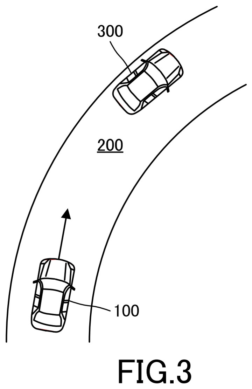

The collision risk reduction control reduces a collision risk between an object 300 and the host vehicle 100 in a case where the object 300 exists within a predetermined range in a traveling direction of the host vehicle 100, for example, as shown in FIG. 3. More specifically, the collision risk reduction control is an automatic braking control which automatically stops the host vehicle 100 before the host vehicle 100 collides with the object 300 ahead of the host vehicle 100. In this case, when the vehicle control apparatus 10 starts the collision risk reduction control, the vehicle control apparatus 10 sets the driving force applied to the host vehicle 100 to zero and applies the braking force to the host vehicle 100 to stop the host vehicle 100.

Alternatively, the collision risk reduction control may avoid a collision between the host vehicle 100 and the object 300 by automatically steering the host vehicle 100 before the host vehicle 100 collides with the object 300 ahead of the host vehicle 100.

It should be noted that, in the example shown in FIG. 3, the object 300 is another vehicle stopped ahead of the host vehicle 100.

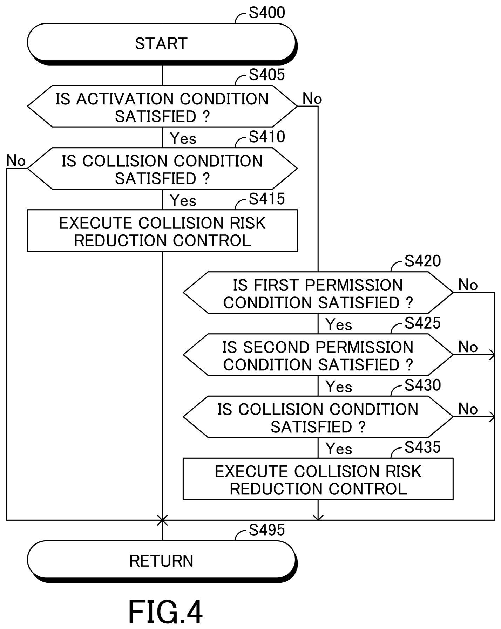

The vehicle control apparatus 10 executes a routine shown in FIG. 4 at predetermined time intervals. As a result, when the control execution condition C2 is satisfied, the vehicle control apparatus 10 executes the collision risk reduction control.

Therefore, when a predetermined timing arrives, the vehicle control apparatus 10 starts a process from a step S400 of the routine shown in FIG. 4. Then, the vehicle control apparatus 10 proceeds with the process to a step S405 to determine whether or not an activation condition C3 is satisfied. In this example, the activation condition C3 is satisfied when the skid prevention system is activated. On the other hand, the activation condition C3 is not satisfied when the skid prevention system is deactivated.

When the skid prevention system is activated, the vehicle control apparatus 10 determines "Yes" at the step S405 and proceeds with the process to a step S410 to determine whether or not a collision condition C4 is satisfied.

The collision condition C4 is satisfied when a collision risk between the host vehicle 100 and the object 300 is at or above a predetermined level. More specifically, the collision condition C4 is satisfied when an object arrival time TTC becomes smaller than a predetermined object arrival time TTCth.

The object arrival time TTC is a time required for the host vehicle 100 to reach the object 300. The object arrival time TTC is calculated by dividing an object distance D by a relative speed Vrel (TTC = D/Vrel). The object distance D is a distance between the host vehicle 100 and the object 300. Further, the relative speed Vrel here is a relative speed of the host vehicle 100 with respect to the object 300 in a case where the host vehicle speed Vego is greater than a speed Vobj of the object 300 (Vrel = Vego - Vobj). The vehicle control apparatus 10 acquires the object distance D and the relative speed Vrel based on the surrounding information IS (in particular, the object information IO). That is, the vehicle control apparatus 10 acquires the object arrival time TTC based on the surrounding information IS (in particular, the object information IO).

When the object arrival time TTC becomes smaller than the predetermined object arrival time TTCth, the vehicle control apparatus 10 determines "Yes" at the step S410 and proceeds with the process to a step S415 to execute the collision risk reduction control. Subsequently, the vehicle control apparatus 10 proceeds with the process to a step S495 to terminate the process of this routine once.

On the other hand, when the object arrival time TTC is equal to or greater than the predetermined object arrival time TTCth, the vehicle control apparatus 10 determines "No" at the step S410 and proceeds with the process directly to the step S495 to terminate the process of this routine once. In this case, the collision risk reduction control is not executed.

Further, when the skid prevention system is deactivated, the vehicle control apparatus 10 determines "No" at the step S405 and proceeds with the process to a step S420. Then, the vehicle control apparatus 10 determines at the step S420 whether or not a first permission condition C51 is satisfied.

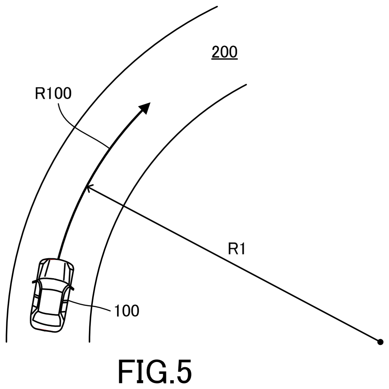

The first permission condition C51 is satisfied when a first curve radius R1 is equal to or greater than a first curve radius threshold R1_th. In this example, the first curve radius R1 is a curve radius of a travel trajectory R100 of the host vehicle 100, as shown in FIG. 5. The travel trajectory R100 is a trajectory estimated as a travel trajectory on which the host vehicle 100 travels.

Therefore, the first permission condition C51 is satisfied when the curve radius of the travel trajectory R100 of the host vehicle 100 is equal to or greater than a predetermined threshold. Here, the larger the curve radius of the travel trajectory R100 becomes, the smaller the curvature degree of the travel trajectory R100 becomes. Therefore, it can be said that the first permission condition C51 is satisfied when the curvature degree of the travel trajectory R100 (travel trajectory curvature degree) is equal to or less than the predetermined threshold. On the other hand, the first permission condition C51 is not satisfied when the curvature degree of the travel trajectory R100 is greater than the predetermined threshold.

The vehicle control apparatus 10 calculates a curve radius of the travel trajectory R100 of the host vehicle 100, for example, based on the steering angle θ and acquires the calculated curve radius as the first curve radius R1. That is, the vehicle control apparatus 10 acquires the curvature degree of the travel trajectory R100 based on the steering angle θ.

Alternatively, the vehicle control apparatus 10 may be configured to calculate a curve radius of the travel trajectory R100 of the host vehicle 100 based on the steering angle θ and vehicle specifications of the host vehicle 100 and acquire the calculated curve radius as the first curve radius R1. That is, the vehicle control apparatus 10 acquires the curvature degree of the travel trajectory R100 based on the steering angle θ and the vehicle specifications of the host vehicle 100. The vehicle specifications of the host vehicle 100 are parameters useful for calculating the curve radius of the travel trajectory R100 of the host vehicle 100 (for example, a wheelbase of the host vehicle 100, etc.).

Alternatively, the vehicle control apparatus 10 may be configured to calculate a curve radius of the travel trajectory R100 of the host vehicle 100 based on the yaw rate YR and acquire the calculated curve radius as the first curve radius R1. That is, the vehicle control apparatus 10 acquires the curvature degree of the travel trajectory R100 based on the yaw rate YR. It should be noted that, in this example, the vehicle control apparatus 10 acquires the yaw rate YR by means of the yaw rate sensor 45. However, the vehicle control apparatus 10 may be configured to acquire the yaw rate YR of the host vehicle 100 based on the steering angle θ and the host vehicle speed Vego.

As described above, the vehicle control apparatus 10 acquires the curvature degree of the travel trajectory R100 of the host vehicle 100. In particular, the vehicle control apparatus 10 acquires the curvature degree of the travel trajectory R100 based on at least one of the steering angle θ and the yaw rate YR.

When the first curve radius R1 is equal to or greater than the first curve radius threshold R1_th, the vehicle control apparatus 10 determines "Yes" at the step S420 and proceeds with the process to a step S425. Then, the vehicle control apparatus 10 determines at the step S425 whether or not a second permission condition C52 is satisfied.

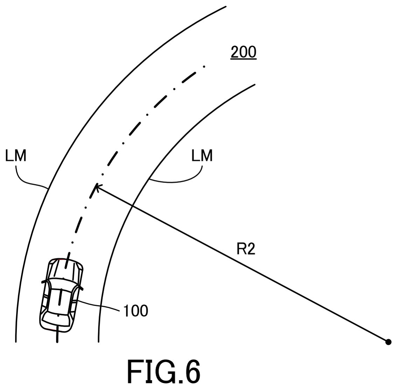

The second permission condition C52 is satisfied when a second curve radius R2 is equal to or greater than a second curve radius threshold R2_th. In this example, the second curve radius R2 is a curve radius of the host vehicle travel road 200, as shown in FIG. 6.

Therefore, the second permission condition C52 is satisfied when the curve radius of the host vehicle travel road 200 is equal to or greater than a predetermined threshold. Here, the larger the curve radius of the host vehicle travel road 200 becomes, the smaller the curvature degree of the host vehicle travel road 200 becomes. Therefore, it can be said that the second permission condition C52 is satisfied when the curvature degree of the host vehicle travel road 200 (travel road curvature degree) is equal to or less than the predetermined threshold.

Also, the second curve radius R2 can be regarded as a curve radius of the travel trajectory R100 of the host vehicle 100. Therefore, in this case, it can also be said that the second permission condition C52 is satisfied when the curve radius of the travel trajectory R100 of the host vehicle 100 is equal to or greater than a predetermined threshold, similarly to the first permission condition C51. Accordingly, it can also be said that the second permission condition C52 is satisfied when the curvature degree of the travel trajectory R100 is equal to or less than the predetermined threshold, similarly to the first permission condition C51. On the other hand, the second permission condition C52 is not satisfied when the curvature degree of the travel trajectory R100 is greater than the predetermined threshold. In this case, the vehicle control apparatus 10 acquires the curvature degree of the host vehicle travel road 200 as the curvature degree of the travel trajectory R100.

The vehicle control apparatus 10 acquires a curve radius of the host vehicle travel road 200 based on the image information IC and acquires the acquired curve radius as the second curve radius R2. More specifically, the vehicle control apparatus 10 detects a road lane marking LM from the image information IC, acquires a curve radius of the host vehicle travel road 200 from a degree of curvature of the detected road lane marking LM, and acquires the acquired curve radius as the second curve radius R2. The road lane marking LM is a line such as a white line that divides a lane in which the host vehicle 100 is traveling on the host vehicle travel road 200, as shown in FIG. 6.

Alternatively, the vehicle control apparatus 10 may be configured to acquire a curve radius of the host vehicle travel road 200 from the map information IM and acquire the acquired curve radius as the second curve radius R2. More specifically, the vehicle control apparatus 10 may be configured to acquire a curve radius of the host vehicle travel road 200 from the current position Pnow of the host vehicle 100 and the map information IM and acquire the acquired curve radius as the second curve radius R2.

As described above, the vehicle control apparatus 10 acquires the curvature degree of the host vehicle travel road 200. Therefore, the vehicle control apparatus 10 acquires the curvature degree of the travel trajectory R100 of the host vehicle 100. In particular, the vehicle control apparatus 10 acquires the curvature degree of the road lane marking LM appearing in an image acquired by the image sensor 52 mounted on the host vehicle 100 for acquiring an image in a traveling direction of the host vehicle 100, as the curvature degree of the host vehicle travel road 200. Alternatively, the vehicle control apparatus 10 acquires the curvature degree of the road on which the host vehicle 100 is traveling, acquired from the map information IM, as the curvature degree of the host vehicle travel road 200.

When the second curve radius R2 is equal to or greater than the second curve radius threshold R2_th, the vehicle control apparatus 10 determines "Yes" at the step S425 and proceeds with the process to a step S430. The vehicle control apparatus 10 determines at the step S430 whether or not the collision condition C4 is satisfied.

When the object arrival time TTC becomes smaller than the predetermined object arrival time TTCth, the vehicle control apparatus 10 determines "Yes" at the step S430 and proceeds with the process to a step S435 to execute the collision risk reduction control. Subsequently, the vehicle control apparatus 10 proceeds with the process to the step S495 to terminate the process of this routine once.

As described above, in a situation where the skid prevention system is deactivated by the driver, when the first permission condition C51 and the second permission condition C52 are satisfied, the vehicle control apparatus 10 permits execution of the collision risk reduction control. That is, the vehicle control apparatus 10 is configured to permit execution of the collision risk reduction control when the curvature degree of the travel trajectory R100 is equal to or less than a predetermined threshold in a situation where the skid prevention system is deactivated by the driver. In this case, the vehicle control apparatus 10 executes the collision risk reduction control without activating the skid prevention system.

On the other hand, when the object arrival time TTC is equal to or greater than the predetermined object arrival time TTCth, the vehicle control apparatus 10 determines "No" at the step S430 and proceeds with the process directly to the step S495 to terminate the process of this routine once. In this case, the collision risk reduction control is not executed.

Further, when the first curve radius R1 is smaller than the first curve radius threshold R1_th, the vehicle control apparatus 10 determines "No" at the step S420 and proceeds with the process directly to the step S495 to terminate the process of this routine once. In this case as well, the collision risk reduction control is not executed.

Further, when the second curve radius R2 is smaller than the second curve radius threshold R2_th, the vehicle control apparatus 10 determines "No" at the step S425 and proceeds with the process directly to the step S495 to terminate the process of this routine once. In this case as well, the collision risk reduction control is not executed.

As described above, the vehicle control apparatus 10 is configured to avoid permitting execution of the collision risk reduction control when either the first permission condition C51 or the second permission condition C52 is not satisfied in a situation where the skid prevention control is deactivated by the driver. That is, the vehicle control apparatus 10 is configured to avoid permitting execution of the collision risk reduction control when the curvature degree of the travel trajectory R100 is greater than a predetermined threshold in a situation where the skid prevention control is deactivated by the driver. Then, when the collision condition C4 is satisfied and execution of the collision risk reduction control is not permitted, the vehicle control apparatus 10 is configured to avoid executing the collision risk reduction control.

It should be noted that, as can be understood from the above description, in this example, the control execution condition C2 is satisfied when the activation condition C3 is satisfied, and also the control execution condition C2 is satisfied when the collision condition C4, the first permission condition C51, and the second permission condition C52 are satisfied in a situation where the activation condition C3 is not satisfied.

Therefore, in a situation where the skid prevention control is activated, the vehicle control apparatus 10 executes the collision risk reduction control when the collision condition C4 that a collision risk between the host vehicle 100 and the object 300 is at or above a predetermined level, is satisfied.

On the other hand, in a situation where the skid prevention control is deactivated, the vehicle control apparatus 10 executes the collision risk reduction control when the collision condition C4 that a collision risk between the host vehicle 100 and the object 300 is at or above a predetermined level, is satisfied and execution of the collision risk reduction control is permitted.

The above is the operation of the vehicle control apparatus 10. According to the vehicle control apparatus 10, in a situation where the skid prevention system is deactivated, even when the control execution condition C2 is satisfied, the collision risk reduction control is executed when the curvature degree of the road on which the host vehicle 100 travels is small. Therefore, it is possible to expand the application range of the collision risk reduction by the collision risk reduction control while taking the driver's intention into consideration.

It should be noted that the present invention is not limited to the above embodiment, and various modifications may be adopted within the scope of the present invention.

For example, although two conditions, namely, the first permission condition C51 and the second permission condition C52, are adopted as conditions for permitting execution of the collision risk reduction control in a situation where the activation condition C3 is not satisfied, only one of the first permission condition C51 and the second permission condition C52 may be adopted.

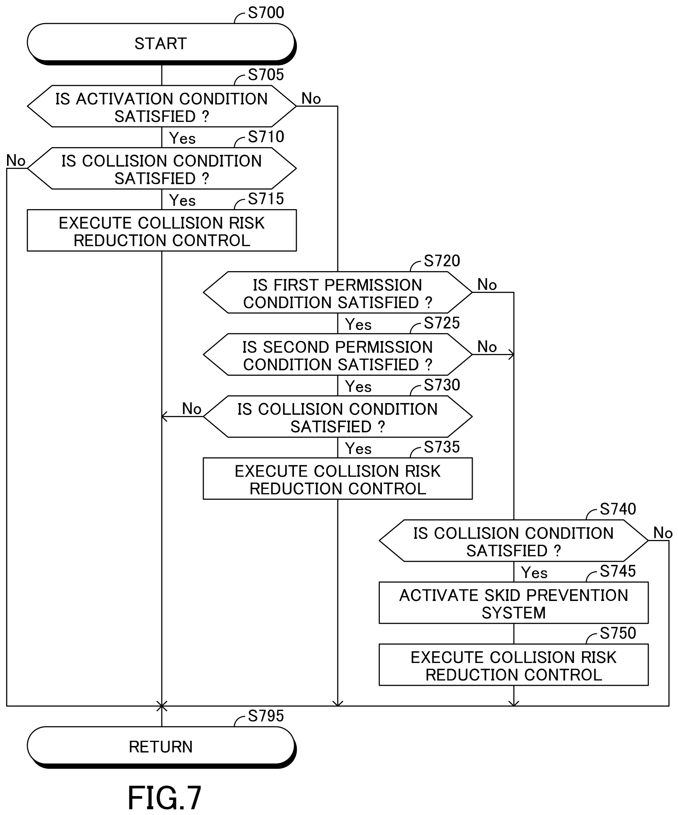

Further, the vehicle control apparatus 10 may be configured to execute a routine shown in FIG. 7 instead of the routine shown in FIG. 4. **In** this case, when a predetermined timing arrives, the vehicle control apparatus 10 starts a process from a step S700 of the routine shown in FIG. 7. Then, the vehicle control apparatus 10 proceeds with the process to a step S705 to determine whether or not the activation condition C3 is satisfied.

When the skid prevention system is activated, the vehicle control apparatus 10 determines "Yes" at the step S705 and proceeds with the process to a step S710 to determine whether or not the collision condition C4 is satisfied.

When the object arrival time TTC becomes smaller than the predetermined object arrival time TTCth, the vehicle control apparatus 10 determines "Yes" at the step S710 and proceeds with the process to a step S715 to execute the collision risk reduction control. Subsequently, the vehicle control apparatus 10 proceeds with the process to a step S795 to terminate the process of this routine once.

On the other hand, when the object arrival time TTC is equal to or greater than the predetermined object arrival time TTCth, the vehicle control apparatus 10 determines "No" at the step S710 and proceeds with the process directly to the step S795 to terminate the process of this routine once. In this case, the collision risk reduction control is not executed.

Further, when the skid prevention system is deactivated, the vehicle control apparatus 10 determines "No" at the step S705 and proceeds with the process to a step S720. Then, the vehicle control apparatus 10 determines at the step S720 whether or not the first permission condition C51 is satisfied.

When the first curve radius R1 is equal to or greater than the first curve radius threshold R1_th, the vehicle control apparatus 10 determines "Yes" at the step S720 and proceeds with the process to a step S725. Then, the vehicle control apparatus 10 determines at the step S725 whether or not the second permission condition C52 is satisfied.

When the second curve radius R2 is equal to or greater than the second curve radius threshold R2_th, the vehicle control apparatus 10 determines "Yes" at the step S725 and proceeds with the process to a step S730. The vehicle control apparatus 10 determines at the step S730 whether or not the collision condition C4 is satisfied.

When the object arrival time TTC becomes smaller than the predetermined object arrival time TTCth, the vehicle control apparatus 10 determines "Yes" at the step S730 and proceeds with the process to a step S735 to execute the collision risk reduction control. Subsequently, the vehicle control apparatus 10 proceeds with the process to the step S795 to terminate the process of this routine once.

On the other hand, when the object arrival time TTC is equal to or greater than the predetermined object arrival time TTCth, the vehicle control apparatus 10 determines "No" at the step S730 and proceed with the process directly to the step S795 to terminate the process of this routine once. In this case, the collision risk reduction control is not executed.

Further, when the first curve radius R1 is smaller than the first curve radius threshold R1_th, the vehicle control apparatus 10 determines "No" at the step S720 and proceeds with the process to a step S740.

Also, when the second curve radius R2 is smaller than the second curve radius threshold R2_th, the vehicle control apparatus 10 determines "No" at the step S725 and proceeds with the process to the step S740.

When the vehicle control apparatus 10 proceeds with the process to the step S740, the vehicle control apparatus 10 determines whether or not the collision condition C4 is satisfied.

When the object arrival time TTC becomes smaller than the predetermined object arrival time TTCth, the vehicle control apparatus 10 determines "Yes" at the step S740 and proceeds with the process to a step S745 to activate the skid prevention system. Subsequently, the vehicle control apparatus 10 proceeds with the process to a step S750 to execute the collision risk reduction control. Then, the vehicle control apparatus 10 proceeds with the process to the step S795 to terminate the process of this routine once.

On the other hand, when the object arrival time TTC is equal to or greater than the predetermined object arrival time TTCth, the vehicle control apparatus 10 determines "No" at the step S740 and proceeds with the process directly to the step S795 to terminate the process of this routine once. In this case, the collision risk reduction control is not executed.

As described above, the vehicle control apparatus 10 may be configured to activate the skid prevention system, permit execution of the collision risk reduction control and execute the collision risk reduction control when the collision condition C4 is satisfied while the curvature degree of the travel trajectory R100 is greater than a predetermined threshold and the skid prevention system is deactivated by the driver.

## Claims

1. A vehicle control apparatus (10) comprising an electronic control unit (90) configured to control:
a collision risk reduction system configured to execute a collision risk reduction control to reduce a collision risk between a host vehicle (100) and an object (300) existing within a predetermined range in a traveling direction of the host vehicle (100); and
a skid prevention system configured to execute a skid prevention control to prevent skidding of the host vehicle (100),
wherein the electronic control unit (90) is configured to execute the collision risk reduction control when a collision condition that the collision risk between the host vehicle (100) and the object (300) is at or above a predetermined level is satisfied and execution of the collision risk reduction control is permitted, and
wherein the electronic control unit (90) is configured to:
acquire a curvature degree of a travel trajectory of the host vehicle (100) as a travel trajectory curvature degree;
permit execution of the collision risk reduction control when the skid prevention system is deactivated by a driver of the host vehicle (100) and the travel trajectory curvature degree is equal to or less than a predetermined threshold; and
avoid permitting execution of the collision risk reduction control when the skid prevention system is deactivated by the driver and the travel trajectory curvature degree is greater than the predetermined threshold.

2. The vehicle control apparatus (10) according to claim 1, wherein the electronic control unit (90) is configured to avoid executing the collision risk reduction control when the collision condition is satisfied and execution of the collision risk reduction control is not permitted.

3. The vehicle control apparatus (10) according to claim 1 or 2, wherein the electronic control unit (90) is configured to acquire the travel trajectory curvature degree based on at least one of a steering angle of the host vehicle (100) and a yaw rate of the host vehicle (100).

4. The vehicle control apparatus (10) according to any of claims 1 to 3,
wherein the electronic control unit (90) is configured to acquire a travel road curvature degree as the travel trajectory curvature degree, and
wherein the travel road curvature degree is a curvature degree of a road on which the host vehicle (100) is traveling.

5. The vehicle control apparatus (10) according to claim 4,
wherein the electronic control unit (90) is configured to acquire, as the travel road curvature degree, one of (i) a curvature degree of a road lane marking appearing in an image acquired by an image sensor (52) and (ii) a curvature degree of a road (200) on which the host vehicle (100) is traveling acquired from map information, and
wherein the image sensor (52) is mounted on the host vehicle (100) to acquire an image in a traveling direction of the host vehicle (100).

6. The vehicle control apparatus (10) according to any of claims 1 to 5, wherein the electronic control unit (90) is configured to activate the skid prevention system, permit execution of the collision risk reduction control, and execute the collision risk reduction control when the collision condition is satisfied, the curvature degree is greater than the predetermined threshold, and the skid prevention system is deactivated by the driver.
